(19) Europäisches Patentamt / European Patent Office / Office européen des brevets

(11) **EP 1 760 122 B1**

(12) **EUROPEAN PATENT SPECIFICATION**

(45) Date of publication and mention
of the grant of the patent:
**24.03.2010   Bulletin 2010/12**

(51) Int Cl.:
***C09D 11/00*** *(2006.01)*

(21) Application number: **06018207.8**

(22) Date of filing: **31.08.2006**

(54) **Water-based inks for ink-jet printing**

Wässrige Tinten für den Tintenstrahldruck

Encres aqueuses pour l'impression par jet d'encre

(84) Designated Contracting States:
**DE GB**

(30) Priority: **01.09.2005   JP 2005253436**
**28.04.2006   JP 2006125828**

(43) Date of publication of application:
**07.03.2007   Bulletin 2007/10**

(73) Proprietor: **KAO CORPORATION**
**Chuo-ku**
**Tokyo 103-8210 (JP)**

(72) Inventors:
• **Yoshida, Hiroyuki**
**Kao Corp. Research Lab.**
**Wakayama-shi**
**Wakayama (JP)**

• **Mizushima, Ryuma**
**Kao Corp. Research Lab.**
**Wakayama-shi**
**Wakayama (JP)**

(74) Representative: **HOFFMANN EITLE**
**Patent- und Rechtsanwälte**
**Arabellastrasse 4**
**81925 München (DE)**

(56) References cited:
**EP-A1- 0 465 124      EP-A1- 0 947 567**
**WO-A-2004/003090      WO-A-2004/035684**
**WO-A-2004/061022      US-A- 5 925 178**

**Description**

FIELD OF THE INVENTION

The present invention relates to water-based inks for ink-jet printing and water dispersions used in the water-based inks.

BACKGROUND OF THE INVENTION

In ink-jet printing methods, droplets of ink are directly projected onto a recording medium from very fine nozzles and allowed to adhere to the recording medium, to form characters and image. The ink-jet printing methods have been rapidly spread because of their various advantages such as easiness of full coloration, low costs, capability of using plain paper as the recording medium, non-contact with printed images and characters, etc.

US 5,925,178 describes a pigmented ink-jet ink comprising an aqueous carrier medium, a pigment, and aluminium stabilized colloidal silica particles of average particle size from 0.0050 $\mu$m to 0.050 $\mu$m. According to this document, the aluminium stabilized colloidal silica improves image quality, optical density, and rubbing resistance on coated papers and films.

WO 2004/003090 describes an aqueous ink-jet ink comprising cyan copper phthalocyanine pigment dispersed in an aqueous vehicle which exhibits-reduced bronzing, a problem typically associated with cyan copper phthalocyanine pigments. It was found that inclusion of a polyurethane dispersion in the ink substantially reduced or eliminated the appearance of bronzing.

EP 0 947 567 describes a method for optimizing the balance between the amount of pigment required for optical density and the amount of resin, which encapsulates the pigment, required for image fixability. The optimisation technique is also reported to effectively prevent bleeding in multi-colour printing processes.

WO 2004/035684 describes aqueous ink compositions for ink-jet printing which comprise metallic or non-metallic inorganic platelet-shaped particles having an average particle diameter of at least 2 $\mu$m, a dispersant and a binder. It is reported that these ink compositions are able to yield prints having a metallic appearance or prints having a colour that changes according to the viewing angle.

JP 2004-91590A discloses a water-based pigment dispersion containing a pigment, a water-soluble organic solvent, a copolymer resin obtained from a monomer component containing 50 to 90% by weight of a styrene monomer and an acid group, and inorganic oxide fine particles in an amount of 0.01 to 10% by weight on the basis of the weight of the pigment, which is intended to satisfy both a storage stability, in particular, a long-term storage stability, and a water resistance of printed images at the same time.

Also, JP 9-227812A discloses a water-based ink-jet printing solution containing a pigment and colloidal silica which is capable of forming printed images with a good clarity and a high quality, and providing prints with sufficient water resistance and light resistance.

In addition, JP 11-12516A discloses an ink-jet printing ink composition containing a pigment, an inorganic oxide colloid, an alkali metal hydroxide and an aqueous solvent which is intended to achieve an excellent ejection stability of the ink composition from a printing head and obtain printed images with a good rubbing resistance. Further, JP 2005-272494A discloses a coating composition for forming a colored silica coating film having high water resistance, durability and heat resistance by fixing dyes or pigments contained therein on a substrate in which plate-shaped silica fine particles having a good self-film forming property and a colorant are used.

However, these conventional water-based inks are still insufficient in optical density of printed images upon printing on a plain paper.

SUMMARY OF THE INVENTION

Thus, the present invention relates to the following aspects (1) to (4):

(1) A water dispersion for ink-jet printing comprising a colorant, metal oxide fine particles having an average particle size of 110 to 400 nm, and water-insoluble polymer particles, a weight ratio of the metal oxide fine particles to the colorant (metal oxide fine particles/colorant) being from 0.2 to 5. Aspect (1) corresponds to claim 1.

(2) A water dispersion for ink-jet printing comprising metal oxide fine particles having an average particle size of 400 nm or smaller, and colorant-containing water-insoluble polymer particles, a weight ratio of the metal oxide fine particles to the colorant (metal oxide fine particles/colorant) being from 0.2 to 5. Aspect (2) corresponds to claim 2.

(3) A water-based ink for ink-jet printing comprising the water dispersion as described in any one of the above aspects (1) to (2).

(4) A method of improving an optical density of images, comprising printing the images with the water-based ink as described in the above aspect (3) by an ink-jet printing method.

DETAILED DESCRIPTION OF THE INVENTION

The present invention relates to water-based inks for ink-jet printing having a high optical density upon printing on plain papers, water dispersions used in the water-based inks, and a method of improving an optical density of printed images using the water-based inks.

The present inventors have found that the merits of the present invention can be achieved by such a water-based ink containing metal oxide fine particles having specific particle size, shape and surface properties in a specific amount on the basis of a colorant.

(Metal Oxide Fine Particles)

In the present invention; the metal oxide fine particles are used in view of improving an optical density of printed images. The constitutional metal element of the metal oxide fine particles includes those belonging to Groups 2A, 2B, 3A, 3B, 4A, 4B, 6A, 6A, 7A and 8 in the Periodic Table (long-form Periodic Table). The metal element may be a metalloid. Specific examples of the metal oxide include silicon oxide (hereinafter referred to merely as "silica"), aluminum oxide (hereinafter referred to merely as "alumina"), manganese oxide, magnesium oxide, zinc oxide, titanium oxide, cerium oxide, zirconium oxide, those compounds obtained by modifying a surface of these oxides with functional groups, and composite particles formed from these oxides using a surfactant. In the present invention, among these metal oxide particles, preferred are silica particles in view of good optical density and dispersibility. The metal oxide fine particles may be made of at least one, compound selected from these metal oxides.

(1) The metal oxide fine particles are preferably in the form of colloidal particles in view of good dispersibility. The colloidal particles are preferably made of at least one material selected from the group consisting of colloidal silica, colloidal titania, colloidal ceria and colloidal alumina. Among these materials of the colloidal particles, preferred is colloidal silica obtained from an aqueous silicic acid solution. In addition, in view of good dispersibility, a dispersing medium used in the colloidal particles is preferably water.

(2) The metal oxide fine particles are preferably in the form of hydrophobic particles whose surface is at least partially hydrophobilized, in view of improving an optical density. Among these hydrophobic particles, more preferred are hydrophobic silica particles.

The existence of hydrophobilized surface of the metal oxide fine particles may be determined by observing by naked eyes whether 1 g of the particles can be stably dispersed in 10 g of methyl ethyl ketone at 25°C for one week.

The surface of the silica particles may be hydrophobilized by (i) the method of modifying a silanol group present on the surface of the silica particles with a hydrophobic group such as an alkylsilyl group preferably having 1 to 12 carbon atoms (e.g., methylsilyl and hexylsilyl); or (ii) the method of coating the surface of the silica particles with a hydrophobic resin.

Examples of a hydrophobilizing agent for rendering the surface of the silica particles hydrophobic include organochlorosilanes, organoalkoxysilanes, organodisilazanes, cyclic organopolysilazanes and linear organopolysiloxanes.

The silanol group present on the surface of silica may be modified with the hydrophobic group such as an alkylsilyl group, for example, by the method of reacting a water-dispersed silica colloid with an alkali metal salt of alkyl silanol (refer to JP 7-33260B, etc.); the method of adding an organic solvent, a cationic surfactant and alkyl trialkoxysilane to a water-dispersed silica colloid, subjecting the resultant mixture to azeotropic dehydration, and then refluxing the obtained product under heating (refer to JP 6-73389A); or the method of reacting wet silica or dry silica with alkyl trialkoxysilane, an organic halogenated silicon compound, etc., (refer to JP 6-206720A, JP 7-187647A, etc.).

In the silica particles in which the silanol group present on the surface thereof is modified with a hydrophobic group, the amount of the silanol group modified with the hydrophobic group is preferably 5 mol% or higher, more preferably 10 mol% or higher and still more preferably 20 mol% or higher on the basis of whole silanol groups present on the surface of the silica particles. As the alkylsilyl group used for modifying the silanol group, there are preferably used linear or branched alkylsilyl groups having 1 to 12 carbon atoms. Specific examples of the alkylsilyl groups include methylsilyl, ethylsilyl, n-propylsilyl, i-propylsilyl, n-butylsilyl, t-butylsilyl, i-butylsilyl, pentylsilyl, hexylsilyl, 2-ethylhexylsilyl, octylsilyl and dodecylailyl.

(3) The metal oxide fine particles are preferably in the form of plate-shaped particles in view of improving an optical density. Among the plate-shaped metal oxide fine particles, more preferred are plate-shaped silica particles. It is considered that the plate-shaped particles have an effect of more effectively preventing pigments from penetrating into plain paper as compared to spherical particles, and can therefore improve an optical density of printed images.

The plate-shaped silica particles may be produced by the method described in JP 2005-272494 A.

The plate-shaped silica particles used in the present invention preferably have an aspect ratio (major axis diameter of plate-shaped silica particles/thickness of plate-shaped silica particles) of 10 to 500, more preferably 10 to 300 and still more preferably 20 to 100 in view of improving an optical density. The aspect ratio of the plate-shaped silica particles may be calculated from respective number-average values obtained by measuring major axis diameters and thicknesses of 100 particles using a transmission electron microscope.

The plate-shaped silica particles preferably have a specific surface area of 30 to 500 $m^2/g$, more preferably 30 to 300 $m^2/g$, still more preferably 30 to 200 $m^2/g$ and further still more preferably 50 to 200 $m^2/g$.

The plate-shaped particles preferably have the following average particle size as measured by the below-mentioned light-scattering method.

From the above-mentioned viewpoints, the metal oxide fine particles are preferably at least one kind of particles selected from the group consisting of colloidal particles, hydrophobic particles and plate-shaped particles and more preferably at least one kind of particles selected from the group consisting of colloidal silica particles, hydrophobic silica particles and plate-shaped silica particles.

The metal oxide fine particles (including colloid particles, hydrophobic particles and plate-shaped particles) have preferred ranges of an average particle size which are present on the following smaller-particle size side and larger-particle size side, respectively, in view of improving an optical density.

(1) Smaller-Particle Size Side: The metal oxide fine particles being present on the smaller-particle size side preferably have an average particle size of 1 to 10 nm and more preferably 2 to 8 nm. The metal oxide fine particles having an average particle size fallen within the above-specified range tend to exhibit a high cohesiveness. Therefore, it is considered that the metal oxide fine particles contained in the water-based ink ejected from nozzles of the printer onto recording papers are coagulated together on or within the papers, resulting in the same effect as that of the particles having a larger particle size as described in (2) below.

(2) Larger-Particle Size Side: In view of improving an optical density, the metal oxide fine particles being present on the larger-particle size side preferably have an average particle size of 20 nm or larger, more preferably 50 nm or larger, still more preferably 80 nm or larger, further still more preferably 110 nm or larger, further still more preferably 140 nm or larger, further still more preferably 160 nm or larger, and most preferably 170 nm or larger. On the other hand, in view of good dispersion stability and ejection property, the metal oxide fine particles being present on the larger-particle size side preferably have an average particle size of 400 nm or smaller, more preferably 350 nm or smaller and still more preferably 300 nm or smaller. In consequence, in view of both improved optical density and good dispersion stability and ejection property, the average particle size of the metal oxide fine particles being present on the larger-particle size side is preferably from 20 to 400 nm, more preferably from 50 to 400 nm, still more preferably from 80 to 400 nm, further still more preferably from 110 to 400 nm, further still more preferably from 140 to 350 nm, further still more preferably from 160 to 350 nm, and most preferably from 170 to 300 nm. When the average particle size of the metal oxide fine particles being present on the larger-particle size side lies within the above specified range, the metal oxide fine particles contained in the water-based ink ejected from nozzles of an ink-jet printer have a larger specific gravity than that of the colorant. Therefore, it is considered that the metal oxide fine particles earlier penetration into the plain paper than the colorant, and the colorant can be prevented from penetrating into the paper, resulting in improved optical density. In view of good optical density, the metal oxide fine particles used in the present invention are made of a compound capable of allowing a pigment to exhibit an average penetration depth (penetrating of pigment) of preferably 65 $\mu$m or less, more preferably 60 $\mu$m or less and still more preferably 55 $\mu$m or less as measured by the below-mentioned standard test method. Also, in view of good rubbing resistance, the metal oxide fine particles used in the present invention are preferably made of a compound capable of allowing a pigment to exhibit an average penetration depth (penetration of pigment) of preferably 10 $\mu$m or more and more preferably 20 $\mu$m or more as measured by the below-mentioned standard test method. In consequence, from these viewpoints as a whole, the average penetration depth of the pigment is preferably from 10 to 65 $\mu$m and more preferably from 20 to 60 $\mu$m.

The average particle size of the metal oxide fine particles in the form of colloid particles and plate-shaped particles may be measured by the light-scattering method described in the below-mentioned Examples. The average particle size of the metal oxide fine particles in the form of a powder may also be measured by the same light-scattering method as described above by using a water dispersion obtained by dispersing the powdery metal oxide fine particles in water in the presence of a polyacrylic acid salt (for example, "POISE 530A" available from Kao Corp.) in an amount of about 0.1 part by weight on the basis of 1 part by weight of the metal oxide fine particles. However, the metal oxide fine particles and the hydrophobic particles having an average particle size of less than 20 nm exhibit a high cohesiveness when subjected to the light-scattering method owing to a diluting water used therein. Therefore, the average particle size of these small size particles may be measured by the same method as used for the below-mentioned pigment.

As to the particle size distribution of the metal oxide fine particles, the ratio of D90 to D50 (D90/D50) thereof is preferably 1 to 3, more preferably 1 to 2 and still more preferably 1 to 1.5 in view of enhancing an optical density, a gloss and an image clarity. Meanwhile, "D90" means such a particle size at which the cumulative particle size distribution is 90% (on the basis of number of particles) when accumulated from the smaller-particle size side of primary particles on an image obtained by measuring particle sizes of 500 particles using a transmission electron microscope (preferably at a magnification of 3000 to 100000 times). Whereas, "D50" means such a particle size at which the cumulative particle size distribution is 50% (on the basis of number of particles) when accumulated from the smaller-particle size side of primary particles on an image obtained under the same conditions as used for the measurement of D90.

In order to prevent the metal oxide fine particles from being coagulated together in the water dispersion and the water-based ink, a zeta potential at 25°C of the metal oxide fine particles in the water dispersion and the water-based ink is suitably controlled such that the metal oxide fine particles exhibit no isoelectric point at a pH of preferably 4.5 to 10, more preferably 5 to 10 and still more preferably 7 top 10. The zeta potential may be determined by a known method ordinarily used therefor.

(Colorant)

The colorant used in the water dispersion of the present invention is preferably a pigment or a hydrophobic dye in view of a good water resistance thereof. Among these colorants, to meet the recent strong demand for a high weather resistance, preferred is the pigment.

The pigment or hydrophobic dye used in the water-based ink is preferably finely divided into stable fine particles using a surfactant or a water-insoluble polymer. In particular, in view of a good bleeding resistance and a good water resistance, the pigment or hydrophobic dye used in the present invention is preferably included in particles of the water-insoluble polymer according to aspect (2) of the invention.

The pigment may be either organic or inorganic. The organic or inorganic pigment may be used in combination with an extender pigment, if required.

Examples of the inorganic pigments include carbon blacks, metal sulfides and metal chlorides. Among these inorganic pigments, carbon blacks are preferably used for black water-based inks. The carbon blacks may include furnace blacks, thermal lamp blacks, acetylene blacks and channel blacks.

Examples of the organic pigments include azo pigments, disazo pigments, phthalocyanine pigments, quinacridone pigments, isoindolinone pigments, dioxazine pigments, perylene pigments, perinone pigments, thioindigo pigments, anthraquinone pigments and quinophthalone pigments.

The hue of the colorant usable in the present invention is not particularly limited. In the present invention, there may be used chromatic pigments such as red organic pigments, yellow organic pigments, blue organic pigments, orange organic pigments and green-orange organic pigments.

Specific examples of the preferred organic pigments include those products having various product numbers of at least one pigment selected from the group consisting of C.I. Pigment Yellow 13, 17, 74, 83, 97, 109, 110, 120, 128, 139, 151, 154, 155, 174, 180; C.I. Pigment Red 48, 57:1, 122, 146, 176, 184, 185, 188, 202; C.I. Pigment Violet 19, 23; C.I. Pigment Blue 15, 15:1, 15:2, 15:3, 15:4, 16, 60; and C.I. Pigment Green 7, 36.

Examples of the extender pigment include calcium carbonate and talc.

The hydrophobic dyes are not particularly limited as long as they are capable of being included in the water-insoluble polymer particles. To allow the dye to efficiently become included in the water-insoluble polymer, the solubility of the hydrophobic dye is preferably 2 g/L or more and more preferably from 20 to 500 g/L as measured at 25°C on the basis of the organic solvent used upon the production of the water-insoluble polymer.

Examples of the hydrophobic dyes include oil dyes and disperse dyes. Among these dyes, preferred are oil dyes.

Examples of the oil dyes include those products having various product numbers of at least one dye selected from the group consisting of C.I. Solvent Black; C.I. Solvent Yellow; C.I. Solvent Red; C.I. Solvent Violet; C.I. Solvent Blue; C.I. Solvent Green; and C.I. Solvent Orange.

Examples of the disperse dyes include those products having various product numbers of at least one dye selected from the group consisting of C.I. Disperse Yellow; C.I. Disperse Orange; C.I. Disperse Red; C.I. Disperse Violet; C.I. Disperse Blue; and C.I. Disperse Green.

Among these dyes, preferred are C.I. Solvent Yellow 29 and 30 for yellow colorant, C.I. Solvent Blue 70 for cyan colorant, C.I. Solvent Red 18 and 49 for magenta colorant, and C.I. Solvent Black 3 and 7 and nigrosine black dyes for black colorant.

The pigments may be in the form of a self-dispersible pigment. The "self-dispersible pigment" means such a pigment capable of being dispersed in a water-based medium without using a surfactant or a resin by bonding at least one hydrophilic group such as anionic or cationic groups to a surface of the pigment directly or through the other atomic group.

The above colorants may be used alone or in combination of any two or more thereof.

When the colorant is made of these pigments, an average primary particle size of the pigment is preferably 40 to 180 nm, more preferably 50 to 170 nm and still more preferably 70 to 140 nm in order to attain a good dispersibility of the pigment and an good optical density, and prevent occurrence of clogging of nozzles in a printer.

The average primary particle size of the pigment may be measured using a transmission electron microscope. More specifically, the average primary particle size is a number-average particle size calculated as an average value of particle sizes of 500 particles measured by an image analysis using a transmission electron microscope available from Nippon Denshi Co., Ltd. Meanwhile, if the colorant has a major axis diameter and a minor axis diameter, the average primary particle size is calculated from the major axis diameter.

(Water-Insoluble Polymer)

Examples of water-insoluble polymers as materials of the water-insoluble polymer particles used in the present invention include water-insoluble vinyl polymers, water-insoluble ester-based polymers and water-insoluble urethane-based polymers. Among these water-insoluble polymers, preferred are water-insoluble vinyl polymers in view of a good stability of the water dispersion. The term "water-insoluble polymer" used herein means such a polymer which is dissolved at 25˚C in 100 g of water in an amount of preferably 10 g or less, more preferably 5 g or less and still more preferably 1 g or less as measured after dried at 105˚C for 2 h. When the water-insoluble polymer contains a salt-forming group, the above amount of the water-insoluble polymer dissolved in water is measured after the salt-forming group is neutralized 100% with acetic acid or sodium hydroxide according to the kind of salt-forming group.

The water-insoluble polymer is preferably a water-insoluble graft polymer containing a constitutional unit derived from a macromer (c) in view of exhibiting a sufficient optical density. In particular, the water-insoluble polymer is more preferably a water-insoluble graft polymer which contains a polymer containing a constitutional unit derived from a salt-forming group-containing monomer (a) and a constitutional unit derived from a hydrophobic monomer (b) in a main chain thereof, and a polymer containing a constitutional unit derived from the macromer (c) in a side chain thereof.

The water-insoluble graft polymer is preferably a water-insoluble vinyl polymer which may be produced by copolymerizing a monomer mixture containing the salt-forming group-containing monomer (a) (hereinafter occasionally referred to merely as the "component (a)"), the hydrophobic monomer (b) (hereinafter occasionally referred to merely as the "component (b)") and the macromer (c) (hereinafter occasionally referred to merely as the "component (c)") (hereinafter, the mixture is occasionally referred to as merely a "monomer mixture").

The component (a) is used for enhancing a dispersion stability of the resultant dispersion. The component (a) includes cationic monomers and anionic monomers. Specific examples of the component (a) include those monomers described on page 5, from column 7, line 24 to column 8, line 29 of JP 9-286939A. Examples of the salt-forming group include a carboxyl group, a sulfonic group, a phosphoric group, an amino group and an ammonium group.

Typical examples of the cationic monomers include unsaturated amine-containing monomers and unsaturated ammonium salt-containing monomers. Among these cationic monomers, preferred are N,N-dimethylaminoethyl (moth) acrylate and N-(N',N'-dimethylaminopropyl) (meth)acrylamide.

Typical examples of the anionic monomers include unsaturated carboxylic acid monomers, unsaturated sulfonic acid monomers and unsaturated phosphoric acid monomers.

Examples of the unsaturated carboxylic acid monomers include acrylic acid, methacrylic acid, crotonic acid, itaconic acid, maleic acid, fumaric acid, citraconic acid and 2-methacryloyloxymethylsuccinic acid.

Examples of the unsaturated sulfonic acid monomers include styrenesulfonic acid, 2-acrylamido-2-methylpropanesulfonic; acid, 3-sulfopropyl (meth)acrylate and bis(3-sulfopropyl)itaconate.

Examples of the unsaturated phosphoric acid monomers include vinylphosphonic acid, vinyl phosphate, bis (methaeryloxyethyl)phosphate, diphenyl-2-acryloyloxyethyl phosphate, diphenyl-2-methacryloyloxyethyl phosphate and dibutyl-2-acryloyloxyethyl phosphate.

Among the above anionic monomers, in view of a good dispersion stability and a good ejecting property of the resultant inks, preferred are the unsaturated carboxylic acid monomers, and more preferred are acrylic acid and methacrylic acid.

The above compounds as the component (a) may be used alone or in combination of any two or more thereof.

The hydrophobic monomer as the above component (b) is used for enhancing a water resistance, a rubbing resistance, an optical density, etc. Examples of the hydrophobic monomer include alkyl (meth)acrylates, alkyl (meth) acrylamides and aromatic ring-containing monomers.

The alkyl (meth)acrylates are preferably (meth)acrylates containing an alkyl group having 1 to 22 carbon atoms, such as methyl (meth)acrylate, ethyl (meth)acrylate, (iso)propyl (meth)acrylate, (iso- or tertiary-)butyl (meth)acrylate, (iso)amyl (meth)acrylate, cyclohexyl (meth)acrylate, 2-ethylhexyl (meth)acrylate, (iso)octyl (meth)acrylate, (iso)decyl (meth)acrylate, (iso)dodecyl (meth)acrylate and (iso)stearyl (meth)acrylate.

Examples of the alkyl (meth)acrylamides include (meth)acrylamides containing an alkyl group having 1 to 22 carbon atoms such as (meth)acrylamide, dimethyl (meth)acrylamide, diethyl (meth)acrylamide, dibutyl (meth)acrylamide, t-butyl (meth)acrylamide, octyl (meth)acrylamide and dodecyl (meth)acrylamide.

Examples of the aromatic ring-containing monomers include styrene-based monomers such as styrene, 2-methyl styrene and vinyl toluene; aryl esters of (meth)acrylic acid such as benzyl (meth)acrylate and phenoxyethyl (meth) acrylate; and vinyl monomers containing an aromatic hydrocarbon group having 6 to 22 carbon atoms such as ethyl vinyl benzene, 4-vinyl biphenyl, 1,1-diphenyl ethylene, vinyl naphthalene and chlorostyrene.

Meanwhile, the terms "(iso- or tertiary-) " and "(iso)" used herein mean both the structure in which the groups expressed by "iso" and "tertiary" are present, and the structure in which these groups are not present (namely, "normal"), and the term "(meth)acrylate" means acrylate, methacrylate or both thereof.

As the component (b), in view of enhancing an optical density, there are preferably used the aromatic ring-containing monomers. Among the aromatic ring-containing monomers, more preferred are the styrene-based monomers (b-1), and still more preferred are styrene and 2-methyl styrene. The content of the component (b-1) in the component (b) is preferably from 10 to 100% by weight and more preferably from 20 to 80% by weight in view of enhancing an optical density and a high resistance to markers.

Also, as the component (b), in view of enhancing a gloss of the resultant water-based ink, etc., there are preferably used the aromatic ring-containing monomers. Among the aromatic ring-containing monomers, more preferred are aryl esters of (meth)acrylic acid (component (b-2)), and still more preferred are (meth)acrylates containing an arylalkyl group having 7 to 22 carbon atoms, preferably 7 to 18 carbon atoms and more preferably 7 to 12 carbon atoms, and (meth)acrylates containing an aryl group having 6 to 22 carbon atoms, preferably 6 to 18 carbon atoms and more preferably 6 to 12 carbon atoms. Specific examples of such an aromatic ring-containing monomer as the component (b-2) include benzyl (meth)acrylate and phenoxyethyl (meth)acrylate. The content of the component (b-2) in the component (b) is preferably from 10 to 100% by weight and more preferably from 20 to 80% by weight in view of enhancing a gloss.

The above respective components (b) may be used alone or in combination of any two or more thereof. Further, the components (b-1) and (b-2) are preferably used in combination thereof.

The component (c) is used for enhancing a dispersion stability of the colorant-containing water-insoluble polymer fine particles, etc., and may be such a macromer which is a monomer containing a polymerizable functional group such as unsaturated group at one terminal end thereof and having a number-average molecular weight of 500 to 100,000 and preferably 1,000 to 10,000.

Meanwhile, the number-average molecular weight of the component (c) may be measured by gel permeation chromatography using polystyrene as a standard substance and using tetrahydrofuran containing 50 mmol/L of acetic acid as a solvent.

Specific examples of the macromer as the component (c) include the below-mentioned styrene-based macromers (c-1), alkyl (meth)acrylate-based macromers (c-2), aromatic ring-containing (meth)acrylate-based macromers (c-3) and silicone-based macromers (c-4).

Styrene-based macromer (c-1):

The styrene-based macromer means a macromer containing the styrene-based monomer (hereinafter occasionally referred to merely as a "monomer (c-1)") such as styrene, $\alpha$-methyl styrene and vinyl toluene. Among these styrene-based monomers; preferred is styrene.

Examples of the styrene-based macromer include styrene homopolymers having a polymerizable functional group at one terminal end thereof, and copolymers of styrene with the other monomer which have a polymerizable functional group at one terminal end thereof. The polymerizable functional group bonded to the one terminal end is preferably an acryloyloxy group or a methacryloyloxy group. When these functional groups are copolymerized with the other components, it is possible to produce the water-insoluble graft polymer containing a constitutional unit derived from the styrene-based macromer.

Examples of the other monomer copolymerizable with styrene include (1) acrylonitrile, (2) the below-mentioned (meth)acrylates (hereinafter occasionally referred to merely as the "monomer (c-2)"), and (3) aromatic ring-containing (meth)acrylate-based monomers other than styrene (hereinafter occasionally referred to merely as the "monomer (c-3)").

The content of the constitutional unit derived from the styrene-based monomer in the side chain or the styrene-based macromer is preferably 60% by weight or higher, more preferably 70% by weight or higher and still more preferably 90% by weight or higher in view of a good rubbing resistance.

The styrene-based macromer is commercially available, for example, from Toagosei Co., Ltd., as product names of AS-6(S), AN-6(S), HS-6(S), etc.

Alkyl(meth)acrylate-based macromer (c-2)

The alkyl(meth)acrylate-based macromer means such a macromer containing the (meth)acrylate (monomer (c-2)) which contains an alkyl group having 1 to 22 carbon atoms and preferably 1 to 18 carbon atoms, and may also contain a hydroxyl group.

Specific examples of the (meth)acrylate include methyl (meth)acrylate, ethyl (meth)acrylate, (iso)propyl (meth)acrylate, 2-hydroxyethyl (meth)acrylate, (iso- or tertiary-)butyl (meth)acrylate, 2-ethylhexyl (meth)acrylate, (iso)octyl (meth)acrylate, (iso)decyl (meth)acrylate and (iso)stearyl (meth)acrylate.

The side chain containing the constitutional unit derived from the monomer (c-2) may be produced by copolymerizing the alkyl(meth)acrylate-based macromer having a polymerizable functional group at one terminal end thereof. Examples of the alkyl(meth)acrylate-based macromer include a methyl methacrylate-based macromer, a butyl acrylate-based macromer, an isobutyl methacrylate-based macromer and a lauryl methacrylate-based macromer.

The alkyl(meth)acrylate-based macromers may be homopolymers of the alkyl(meth)acrylate having a polymerizable functional group at one terminal end thereof, or copolymers of the alkyl(meth)acrylate with other monomer, which have a polymerizable functional group at one terminal end thereof. The polymerizable functional group bonded to the one terminal end is preferably an acryloyloxy group or a methacryloyloxy group. Examples of the other monomer copolymerizable with the alkyl(meth)acrylate include the above-mentioned styrene-based monomers (monomers (c-1)) and the below-mentioned aromatic ring-containing (meth)acrylate-based monomers other than styrene (monomer (c-3)).

In the side chain or the alkyl(meth)acrylate-based macromer, the content of the constitutional unit derived from the (meth)acrylate is largest, and preferably 60% by weight or higher, more preferably 70% by weight or higher and still more preferably 90% by weight or higher in view of a good rubbing resistance.

Aromatic ring-containing (meth)acrylate-based macromer (c-3)

The aromatic ring-containing (meth)acrylate-based macromer means such a macromer containing the aromatic ring-containing (meth)acrylate as the monomer (c-3). The aromatic ring-containing (meth)acrylate is preferably a monomer represented by the following formula (1):

$$CH_2=CR^1COOR^2 \qquad (1)$$

wherein $R^1$ is a hydrogen atom or a methyl group; and $R^2$ is a substituted or unsubstituted arylalkyl group having 7 to 22 carbon atoms or a substituted or unsubstituted aryl group having 6 to 22 carbon atoms.

Specific examples of the aromatic ring-containing (meth)acrylate include benzyl (meth)acrylate, phenyl (meth)acrylate, 2-phenylethyl (meth)acrylate, phenoxyethyl (meth)acrylate, 1-naphthyl acrylate, 2-naphthyl (meth)acrylate, phthalimidomethyl (meth)acrylate, p-nitrophenyl (meth)acrylate, 2-hydroxy-3-phenoxypropyl (meth)acrylate, 2-methaeryloyloxyethyl-2-hydroxypropyl phthalate and 2-acryloyloxyethyl phthalate. Among these aromatic ring-containing (meth)acrylates, preferred is benzyl (meth)acrylate. These the aromatic ring-containing (meth)acrylates may be used alone or in combination of any two or more thereof.

The side chain containing the constitutional unit derived from the aromatic ring-containing (meth)acrylate may be produced by copolymerizing the aromatic ring-containing (meth)acrylate-based macromer having a polymerizable functional group at one terminal end thereof.

Examples of the aromatic ring-containing (meth)acrylate-based macromer include homopolymers of the aromatic ring-containing (meth)acrylate having a polymerizable functional group at one terminal end thereof, and copolymers of the aromatic ring-containing (meth)acrylate with other monomer which have a polymerizable functional group at one terminal end thereof. The polymerizable functional group bonded to one terminal end of the macromer is preferably an acryloyloxy group or a methacryloyloxy group. Examples of the other monomer copolymerizable with the aromatic ring-containing (meth)acrylate include (1) the above-mentioned styrene-based monomers as the monomer (c-1) and (2) the (meth)acrylates as the monomer (c-2).

In the side chain or the aromatic ring-containing (meth)acrylate-based macromer, the constitutional unit derived from the aromatic ring-containing (meth)acrylate has a largest content.

Silicone-based macromer (c-4)

The water-insoluble graft polymer used in the present invention may further contain an organopolysiloxane chain as the side chain thereof. Such a side chain is preferably produced, for example, by copolymerizing a silicone-based macromer having a polymerizable functional group at one terminal end thereof which is represented by the following formula (2):

$$CH_2=C(CH_3)\text{-}COOC_3H_6\text{-}[Si(CH_3)_2\text{-}O]_t\text{-}Si(CH_3)_3 \qquad (2)$$

wherein t is a number of 8 to 40.

Among the above macromers, the styrene-based macromers having a polymerizable functional group at one terminal end thereof are preferred in view of a high affinity to colorants and an enhanced storage stability.

In the present invention, the above macromers may be used alone or in combination of any two or more thereof.

When the polymer used in the present invention is the water-insoluble graft polymer, the weight ratio of a main chain of the polymer to a side chain thereof [main chain/side chain] is preferably from 1/1 to 20/1, more preferably from 3/2 to 15/1 and still more preferably from 2/1 to 10/1 in view of enhancing a rubbing resistance and a storage stability. Meanwhile, the weight ratio is calculated assuming that the polymerizable functional group is contained in the side chain.

In the present invention, the monomer mixture containing the respective components (a), (b) and (c) preferably further contains (d) a hydroxyl-containing monomer (hereinafter occasionally referred to merely as a "component (d)").

The component (d) exhibits an excellent effect of enhancing the dispersion stability. Examples of the component (d) include 2-hydroxyethyl (meth)acrylate, 3-hydroxypropyl (meth)acrylate, polyethylene glycol (n = 2 to 30 wherein n represents an average molar number of addition of oxyalkylene groups: this definition is similarly applied to the subsequent descriptions) (meth) acrylate, polypropylene glycol (n = 2 to 30) (meth)acrylate and poly(ethylene glycol (n = 1 to 15)/ propylene glycol (n = 1 to 15) (meth)acrylate. Among these components (d), preferred are 2-hydroxyethyl (meth)acrylate, polyethylene glycol monomethacrylate and polypropylene glycol methacrylate.

The monomer mixture may further contain (e) a monomer (hereinafter occasionally referred to merely as a "component (e)") represented by the following general formula (3):

$$CH_2=C(R^3)COO(R^4O)_pR^5 \qquad (3)$$

wherein $R^3$ is a hydrogen atom or an alkyl group having 1 to 5 carbon atoms; $R^4$ is a divalent hydrocarbon group having 1 to 30 carbon atoms which may contain a hetero atom; $R^5$ is a monovalent hydrocarbon group having 1 to 30 carbon atoms which may contain a hetero atom; and p represents an average molar number of addition, and is a number from 1 to 60 and preferably a number from 1 to 30.

The component (e) exhibits an excellent effect of enhancing an ejecting property of the resultant water-based ink and preventing occurrence of slippage even upon continuous printing.

In the general formula (3), examples of the hetero atom which may be contained in $R^4$ and $R^5$ groups include a nitrogen atom, an oxygen atom, a halogen atom and a sulfur atom.

Typical examples of the groups represented by $R^4$ and $R^5$ include an aromatic group having 6 to 30 carbon atoms, a heterocyclic group having 3 to 30 carbon atoms, and an alkylene group having 1 to 30 carbon atoms. These groups may have a substituent group, and may be used in combination of any two or more thereof. Examples of the substituent group include an aromatic group, a heterocyclic group, an alkyl group, a halogen atom and an amino group.

Examples of the groups represented by $R^4$ include a substituted or unsubstituted phenylene group having 1 to 24 carbon atoms, an aliphatic alkylene group having 1 to 30 carbon atoms and preferably 1 to 20 carbon atoms, an aromatic ring-containing alkylene group having 7 to 30 carbon atoms, and a hetero ring-containing alkylene group having 4 to 30 carbon atoms. Specific examples of the preferred $R^4O$ group include an oxymethylene group, an oxy(iso)propylene group, an oxytetramethylene group, an oxyheptamethylene group, an oxyhexamethylene group, and oxyalkylene or oxyphenylene groups having 2 to 7 carbon atoms which are each constituted from at least one of these oxyalkylene groups.

Examples of the groups represented by $R^5$ include a phenyl group, a branched or unbranched aliphatic alkyl group having 1 to 30 carbon atoms and preferably 1 to 20 carbon atoms, an aromatic ring-containing alkyl group having 7 to 30 carbon atoms, and a hetero ring-containing alkyl group having 4 to 30 carbon atoms. Examples of the preferred $R^5$ group include an alkyl group having 1 to 12 carbon atoms such as methyl, ethyl, (iso)propyl, (iso)butyl, (iso)pentyl and (iso)hexyl, and a phenyl group.

Specific examples of the component (e) include methoxy polyethylene glycol (p in the general formula (3): 1 to 30; this is similarly applied to the subsequent descriptions) (meth)acrylate, methoxy polytetramethylene glycol (p = 1 to 30) (meth)acrylate, ethoxy polyethylene glycol (p = 1 to 30) (meth)acrylate, (iso)propoxy polyethylene glycol (p = 1 to 30) (meth)acrylate, butoxy polyethylene glycol (p = 1 to 30) (meth)acrylate, octoxy polyethylene glycol (p = 1 to 30) (meth)acrylate, methoxy polypropylene glycol (p = 1 to 30) (meth)acrylate, and methoxy (ethylene glycol/propylene glycol copolymer) (p = 1 to 30: among which the number of ethylene glycol constitutional units is 1 to 29) (meth)acrylate. Among these compounds, preferred is methoxy polyethylene glycol (p = 1 to 30) (meth)acrylate.

Specific examples of the commercially available components (d) and (e) include polyfunctional acrylate monomers (NK Esters) available from Shin-Nakamura Kagaku Kogyo Co., Ltd., such as "M-40G", "M-90G" and "M-230G"; and BLEMMER Series available from NOF Corporation, such as "PE-90", "PE-200", "PE-350", "PME-100", "PME-200", "PME-400", "PME-1000", "PP-1000", "PP-600", "PP-800", "AP-150", "AP-400", "AP-650", "AP-800", "50PEP-300" and "50POEP-800B".

These components (d) and (e) are respectively used alone or in the form of a mixture of any two or more thereof.

The respective contents of the above components (a) to (e) in the monomer mixture are as follows.

The content of the component (a) is preferably from 3 to 30% by weight and more preferably from 4 to 20% by weight in view of a good dispersion stability of the resultant dispersion, etc.

The content of the component (b) is preferably from 10 to 70% by weight and more preferably from 15 to 60% by weight in view of enhancing a water resistance, a rubbing resistance and an optical density.

The content of the component (c) is preferably from 1 to 26% by weight and more preferably from 5 to 20% by weight in view of a good dispersion stability of the colorant-containing water-insoluble polymer fine particles.

The weight ratio of the component (a) to a sum of the components (b) and (c) ((a)/[(b)+(c)]) is preferably from 0.01 to 1, more preferably from 0.02 to 0.67 and still more preferably from 0.03 to 0.50 in view of a good long-term storage stability and a good ejecting property of the resultant water-based ink, etc.

The content of the component (d) is preferably from 5 to 40% by weight and more preferably from 7 to 20% by weight in view of a good ejecting property and a good optical density.

The content of the component (e) is preferably from 5 to 50% by weight and more preferably from 10 to 40% by weight in view of a good ejecting property, a good dispersion stability, etc.

The total content of the components (a) and (d) in the monomer mixture is preferably from 6 to 60% by weight and more preferably from 10 to 50% by weight in view of a good stability in water and a good optical density.

The total content of the components (a) and (e) in the monomer mixture is preferably from 6 to 75% by weight and more preferably from 13 to 50% by weight in view of a good dispersion stability in water, a good ejecting property, etc.

The total content of the components (a), (d) and (e) in the monomer mixture is preferably from 6 to 60% by weight and more preferably from 7 to 50% by weight in view of a good dispersion stability in water, a good optical density and a good ejecting property.

The contents of the respective components (a) to (e) in the water-insoluble polymer are the same as those in the monomer mixture described above.

The water-insoluble polymer constituting the water-insoluble polymer particles used in the present invention may be produced by copolymerizing the monomer mixture by known methods such as bulk polymerization, solution polymerization, suspension polymerization and emulsion polymerization. Among these polymerization methods, the solution polymerization is preferred since the effects of the present invention such as high optical density and high anti-bleeding property are suitably attained by the method.

The solvent for the solution polymerization method is preferably an organic polar solvent having a high affinity to the water-insoluble polymer. The organic polar solvent preferably has a solubility in water of 50% by weight or less but 5% by weight or more as measured at 20˚C. Examples of the organic polar solvents include aliphatic alcohols such as butoxyethanol; aromatic hydrocarbons such as toluene and xylene; ketones such as methyl ethyl ketone and methyl isobutyl ketone; and esters such as ethyl acetate. Among these solvents, preferred are methyl ethyl ketone, methyl isobutyl ketone, toluene, xylene, butoxyethanol, and mixed solvents of at least one thereof with water.

The polymerization may be carried out in the presence of a conventionally known polymerization initiator, e.g., azo compounds such as 2,2'-azobisisobutyronitrile and 2,2'-azobis(2,4-dimethylvaleronitrile), and organic peroxides such as t-butyl peroxyoctoate and dibenzoyl oxide.

The amount of the polymerization initiator to be used is preferably from 0.001 to 5 mol and preferably from 0.01 to 2 mol per 1 mol of the monomer mixture.

The polymerization may also be carried out in the presence of a conventionally known chain transfer agent, e.g., mercaptans such as octyl mercaptan and 2-mercaptoethanol, and thiuram disulfides.

The polymerization conditions of the monomer mixture vary depending upon the kinds of polymerization initiators, monomers, solvents, etc., to be used, and the polymerization is generally conducted at a temperature of 30 to 100˚C and preferably 50 to 80˚C. The polymerization time is from 1 to 20 h. The polymerization is preferably conducted in an atmosphere of a nitrogen gas or an inert gas such as argon.

After completion of the polymerization, the polymer thus produced is isolated from the reaction solution by a known method such as reprecipitation and removal of solvent by distillation.

The weight-average molecular weight of the resultant water-insoluble polymer is preferably from 5,000 to 500,000, more preferably from 10,000 to 400,000 and still more preferably from 10,000 to 300,000 in view of a good dispersion stability of the colorant, a good water resistance and a good ejecting property.

Meanwhile, the weight-average molecular weight of the polymer may be measured by gel chromatography using N, N-dimethylformamide containing 60 mmol/L of phosphoric acid and 50 mmol/L of lithium bromide as a solvent and using polystyrene as a standard substance.

When the water-insoluble polymer used in the present invention contains a salt-forming group derived from the salt-forming group-containing monomer (a), the salt-forming group is neutralized with a neutralizing agent. As the neutralizing agent, acids or bases may be used according to the kind of the salt-forming group in the water-insoluble polymer. Examples of the neutralizing agent include acids such as hydrochloric acid, acetic acid, propionic acid, phosphoric acid, sulfuric acid, lactic acid, succinic acid, glycolic acid, gluconic acid and glyceric acid, and bases such as lithium hydroxide, sodium hydroxide, potassium hydroxide, ammonia, methylamine, dimethylamine, trimethylamine, ethylamine, diethylamine, triethylamine, triethanolamine and tributylamine.

The degree of neutralization of the salt-forming group in the water-insoluble polymer is usually from 10 to 200%, preferably from 20 to 150% and more preferably from 50 to 150%. In this case, when the salt-forming group is an anionic group, the degree of neutralization thereof is calculated according to the following formula:

$$[\text{weight (g) of neutralizing agent})/\text{equivalent of neutralizing agent}]/$$

$$[\text{acid value of polymer (KOH mg/g) x weight (g) of polymer}/(56 \times 1000)] \times 100$$

On the other hand, when the salt-forming group is a cationic group, the degree of neutralization thereof is calculated according to the following formula:

$$[\text{weight (g) of neutralizing agent})/\text{equivalent of neutralizing agent}]/$$

$$[\text{amine value of polymer (HCl mg/g) x weight (g) of polymer}/(36.5 \times 1000)] \times 100$$

The acid value or amine value may be calculated from the respective constitutional units of the polymer, or may also be determined by the method of subjecting a solution prepared by dissolving the polymer in an appropriate solvent such as methyl ethyl ketone to titration.

(Water-Insoluble Polymer Particles)

The water-insoluble polymer particles have an effect of enhancing a water resistance and a rubbing resistance. According to aspect (2) of the invention, the colorant is included in the water-insoluble polymer particles (hereinafter referred to as "colorant-containing water-insoluble polymer particles"), thereby ensuring not only enhancement in dispersion stability of the colorant, but also facilitated penetration of the metal oxide fine particles in plain papers and, therefore, improvement in optical density. An example of a process for producing the colorant-containing water-insoluble polymer particles is described below.

Step (1): Dispersing a mixture containing the water-insoluble polymer, organic solvent, colorant and water as well as neutralizing agent, if required.

Step (2): Removing the organic solvent from the resultant dispersion.

In the step (1), first, the water-insoluble polymer is dissolved in an organic solvent, and then the colorant and water together with optional components such as neutralizing agent and surfactant, if required, are preferably added and mixed in the resultant organic solvent solution to obtain a dispersion of an oil-in-water type. The content of the colorant in the mixture is preferably from 5 to 50% by weight. The content of the organic solvent in the mixture is preferably from 10 to 70% by weight. The content of the water-insoluble polymer in the mixture is preferably from 2 to 40% by weight, and the content of water in the mixture is preferably from 10 to 70% by weight. The water-insoluble polymer containing a salt-forming group is preferably neutralized with a neutralizing agent. Alternatively, the water-insoluble polymer may be previously neutralized with the neutralizing agent. The degree of neutralization of the salt-forming group in the polymer is not particularly limited. In general, the degree of neutralization is preferably controlled such that the finally obtained water dispersion exhibits a neutral liquid property, for example, a pH of 4.5 to 10. The pH of the dispersion may also be determined from a desired degree of neutralization for the water-insoluble vinyl polymer.

Examples of the preferred organic solvents include alcohol solvents, ketone solvents and ether solvents, i.e., the organic solvents are preferably those having a solubility in water of 50% by weight or lower but 10% by weight or higher as measured at 20°C.

Examples of the alcohol solvents include ethanol, isopropanol, n-butanol, tertiary butanol, isobutanol and diacetone alcohol. Examples of the ketone solvents include acetone, methyl ethyl ketone, diethyl ketone and methyl isobutyl ketone. Examples of the ether solvents include dibutyl ether, tetrahydrofuran and dioxane. Among these solvents, preferred are isopropanol, acetone and methyl ethyl ketone, and more preferred is methyl ethyl ketone. These solvents may be used alone or in the form of a mixture of any two or more thereof.

As the neutralizing agent, acids or bases may be selectively used according to the kind of salt-forming group contained in the water-insoluble polymer. Specific examples of the neutralizing agent include acids such as hydrochloric acid, acetic acid, propionic acid, phosphoric acid, sulfuric acid, lactic acid, succinic acid, glycolic acid, gluconic acid and glyceric acid, and bases such as lithium hydroxide, sodium hydroxide, potassium hydroxide, ammonia, methylamine, dimethylamine, trimethylamine, ethylamine, diethylamine, triethylamine and triethanolamine.

The method for dispersing the mixture used in the step (1) is not particularly limited. Preferably, the mixture is first subjected to preliminary dispersion procedure, and then to the substantial dispersion procedure by applying a shear stress thereto. In the step (1), the solids contained in the dispersion are finely divided so as to produce the water-insoluble polymer particles having a desired average particle size.

Upon subjecting the mixture to the preliminary dispersion procedure, there may be used ordinary mixing or stirring devices such as anchor blades. Examples of the preferred mixing or stirring devices include high-speed mixers or stirrers such as "Ultra Disper" (tradename: available from Asada Tekko Co., Ltd.), "Ebara Milder" (tradename: available from Ebara Seisakusho Co., Ltd.), "TK Homomixer", "TK Pipeline Mixer", "TK Homo Jetter", "TK Homomic Line Flow" and "Filmix" (tradenames: all available from Tokushu Kika Kogyo Co., Ltd.), "Clearmix" (tradename: available from M-Technic Co., Ltd.) and "K.D. Mill" (tradename: available from Kinetics Dispersion Inc.).

To apply the shear stress to the mixture in the substantial dispersion procedure, there may be used, for example, kneading machines such as roll mills, beads mills, kneaders and extruders, homo-valve-type high-pressure homogenizers such as typically "High-Preasure Homogenizer" (tradename: available from Izumi Food Machinery Co., Ltd.) and "Mini-Labo 8.3H Model" (tradename: available from Rannie Corp.), and chamber-type high-pressure homogenizers such as "Micro Fluidizer" (tradename: available from Microfluidics Inc.), "Nanomizer" (tradename: available from Nanomizer Co., Ltd.), "Altimizer" (tradename: available from Sugino Machine Co., Ltd.), "Genus PY" (tradename: available from Hakusui Kagaku Co., Ltd.) and "DeBEE 2000" (tradename: Nippon BEE Co., Ltd.). Among these apparatuses, the high-pressure homogenizers are preferred in view of reducing a particle size of the pigment contained in the mixture.

In the step (2), the organic solvent is removed by distillation from the dispersion thus obtained in the above step (1) to render the dispersion aqueous or water-based and thereby obtain a water dispersion of the colorant-containing water-insoluble polymer particles having a desired average particle size. The removal of the organic solvent from the water dispersion may be performed by an ordinary method such as distillation under reduced pressure. The organic solvent is substantially completely removed from the thus obtained water dispersion of the water-insoluble polymer particles. The content of the residual organic solvent in the water dispersion is usually 0.1% by weight or lower and preferably 0.01% by weight or lower.

Further, the thus obtained water dispersion of the water-insoluble polymer particles may be fractionated by centrifugal separation in order to obtain the colorant-containing polymer particles having a desired particle size. The thus obtained water dispersion of the water-insoluble polymer particles is preferably passed through a filter to remove coarse particles therefrom. In the above water dispersion of the colorant-containing water-insoluble polymer particles, solid components made of the colorant-containing water-insoluble polymer are dispersed in water as a main solvent. The configuration of the colorant-containing water-insoluble polymer particles is not particularly limited as long as the particles are formed from at least the colorant and the water-insoluble polymer. Examples of the configuration of the colorant-containing water-insoluble polymer particles include the particle configuration in which the colorant is enclosed in the respective water-insoluble polymer particles, the particle configuration in which the colorant is uniformly dispersed in the respective water-insoluble polymer particles, and the particle configuration in which the colorant is exposed onto a surface of the respective water-insoluble polymer particles.

The average particle size of the water-insoluble polymer particles and the colorant-containing water-insoluble polymer particles is measured by the light-scattering method described in the below-mentioned Examples. The average particle size is preferably 50 to 200 nm, more preferably 50 to 150 nm, still more preferably 60 to 150 nm and further still more preferably 80 to 150 nm in view of preventing occurrence of clogging of nozzles in a printer and enhancing an optical density. The water-insoluble polymer particles containing no colorant according to aspect (1) of the invention may be produced through the steps (1) and (2) in the same manner as described above except for using no colorant.

(Water Dispersion/Water-based Ink)

The first preferred embodiment aspect (1) of the present invention relates to such a water dispersion for ink-jet printing comprising a colorant, metal oxide fine particles having an average particle size of 110 to 400 nm, and water-insoluble polymer particles, a weight ratio of the metal oxide fine particles to the colorant (metal oxide fine particles/colorant) being from 0.2 to 5.

The second preferred embodiment aspect (2) of the present invention relates to such a water dispersion for ink-jet printing comprising metal oxide fine particles having an average particle size of 400 nm or smaller, and colorant-containing water-insoluble polymer particles, a weight ratio of the metal oxide fine particles to the colorant (metal oxide fine particles/colorant) being from 0.2 to 5. By incorporating the colorant into the water-insoluble polymer particles, it is considered that the optical density can be enhanced by the above effect even when using the metal oxide fine particles having a relatively small particle size.

When the water dispersion for ink-jet printing according to aspect (1) or (2) of the invention comprises plate-shaped metal oxide fine particles, the plate-shaped metal oxide fine particles have an effect of enhancing an optical density even when used in a small amount, and also exhibit a good dispersion stability.

Upon producing the water dispersion of the present invention which contains the colorant, the metal oxide fine particles and the water-insoluble polymer particles, the respective components may be added and mixed in any optional order. When using the colorant-containing water-insoluble polymer particles, the polymer particles may be mixed with the metal oxide fine particles.

The contents of the respective components in the water dispersion or the water-based ink for ink-jet printing according to the present invention are as follows.

The content of the metal oxide fine particles in the water dispersion or the water-based ink is preferably 1 to 30% by weight, more preferably 2 to 20% by weight and still more preferably 3 to 15% by weight in view of enhancing an optical density and imparting a good dispersion stability thereto.

The content of the colorant in the water dispersion or the water-based ink is preferably 1 to 10% by weight, more preferably 2 to 10% by weight, still more preferably 3 to 10% by weight and further still more preferably 4 to 8% by weight in view of enhancing an optical density, and a good dispersion stability of the colorant.

The weight ratio of the metal oxide fine particles to the colorant (metal oxide fine particles/colorant) is 0.2 to 5 in order to allow the metal oxide fine particles to exhibit an effect of enhancing an optical density and attain a good dispersion stability thereof in the water dispersion and the water-based ink.

The content of the water-insoluble polymer particles (except for the colorant) is preferably 2 to 10% by weight, more preferably 2 to 8% by weight and still more preferably 4 to 8% by weight in view of a good rubbing resistance and a good dispersion stability of the colorant.

The weight ratio of the colorant to the water-insoluble polymer (colorant/water-insoluble polymer) is preferably 50/50 to 90/10 and more preferably 50/50 to 80/20 in view of enhancing an optical density and a rubbing resistance.

When the colorant is included in the water-insoluble polymer particles, the ratio of an average particle size of the metal oxide fine particles to an average particle size of the colorant-containing water-insoluble polymer particles (average particle size of the metal oxide fine particles/average particle size of the colorant-containing water-insoluble polymer particles) is preferably 0.005 to 8 in view of allowing the metal oxide fine particles to exhibit an effect of enhancing an optical density. More specifically, when the metal oxide fine particles used are present on the smaller-particle size side described above, the ratio of an average particle size of the metal oxide fine particles to an average particle size of the colorant-containing water-insoluble polymer particles is preferably 0.005 to 0.2 and more preferably 0.01 to 0.1, whereas when the metal oxide fine particles used are present on the larger-particle size side described above, the ratio of an average particle size of the metal oxide fine particles to an average particle size of the colorant-containing water-insoluble polymer particles is preferably 0.2 to 8, more preferably 0.5 to 7, still more preferably 1 to 5, further still more preferably 1.5 to 3 and most preferably 1.8 to 3.

When using the metal oxide fine particles having an average particle size fallen within the above-specified ranges, it is considered that the metal oxide fine particles which earlier penetration into the plain paper can effectively prevent the colorant-containing water-insoluble polymer particles from penetrating thereinto, resulting in enhancement in optical density. In the case where the colorant is not included in the water-insoluble polymer particles, the preferred range of a ratio of an average particle size of the metal oxide fine particles to an average particle size of the colorant (average particle size of metal oxide fine particles/average particle size of colorant) is identical to that of the ratio of an average particle size of the metal oxide fine particles to an average particle size of the colorant-containing water-insoluble polymer particles as described above.

The water dispersion of the present invention may be directly used as a water-based ink using water as a main solvent, and may further contain various additives ordinarily used in water-based inks for ink-jet printing such as wetting agents, penetrants, dispersants, viscosity modifiers, defoaming agents, mildew-proof agents and anti-corrosion agents.

The total content of the colorant and the water-insoluble polymer particles in the water dispersion, namely the content (solid content) of the colorant-containing water-insoluble polymer particles in the water dispersion, is preferably from 0.5 to 30% by weight and more preferably from 5 to 25% by weight, whereas the total content of the colorant and the water-insoluble polymer particles in the water-based ink, namely the content (solid content) of the colorant-containing water-insoluble polymer particles in the water-based ink, is preferably 1 to 15% by weight and more preferably 3 to 12% by weight, in view of a good optical density and a good ejection stability thereof.

The content of water in the water dispersion and the water-based ink of the present invention is preferably from 30 to 90% by weight and more preferably from 40 to 80% by weight.

The surface tension of the water dispersion of the present invention is preferably from 30 to 65 mN/m and more preferably from 35 to 60 mN/m as measured at 20°C, and the surface tension of the water-based ink of the present invention is preferably from 23 to 50 mN/m, more preferably from 23 to 45 mN/m, still more preferably from 23 to 40 mN/m and further still more preferably from 23 to 30 mN/m as measured at 20°C.

The viscosity of the water dispersion of the present invention which has a solid content of 20 wt% is preferably from 1 to 12 mPa·s, more preferably from 1 to 9 mPa·s, still more preferably from 2 to 6 mPa·s and further still more preferably from 2 to 5 mPa·s as measured at 20°C to produce a water-based ink having a suitable viscosity.

The viscosity of the water-based ink of the present invention is preferably from 2 to 12 mPa·s, more preferably from 2.5 to 10 mPa·s and still more preferably from 2.5 to 6 mPa·s as measured at 20°C in view of maintaining a good ejection property thereof.

(Method of Improving Optical Density)

In the method of improving an optical density according to the present invention, inkjet printing is conducted using the water-based ink of the present invention, thereby enhancing an optical density of prints produced. In this case, a recording medium to be printed is not particularly limited, and as the recording medium, there may be used any of generally available plain papers and coated papers. Among these recording media, plain papers are more effectively used in view of allowing the metal oxide fine particles contained in the water dispersion and the water-based ink to exhibit effects intended by the present invention.

The method of improving an optical density according to the present invention can be applied to any ink-jet printing method as long as the water-based ink of the present invention is usable therein. In particular, the method of the present invention is more suitably applied to such a case where a plain paper is printed with the water-based ink of the present invention using a high-speed printer, for example, at a printing speed of preferably 3 to 30 sheets/min, more preferably 5 to 30 sheets/min and still more preferably 10 to 30 slieets/min. Meanwhile, the printing speed described above means a printing speed used in such a case where a standard pattern (J6) (A4 size) provided by Japan Electronic Information Technology Association (JEITA) is printed using a printer set to a high-speed printing mode (Fine).

The water dispersion and the water-based ink of the present invention exhibit a high optical density upon printing images or characters therewith on plain papers, etc.

The following examples further describe and demonstrate embodiments of the present invention, The examples are given only for the purpose of illustration and are not to be construed as limitations of the present invention.

EXAMPLES

In the following production examples, examples and comparative examples, the "part(s)" and "%" indicate "part(s) by weight" and "% by weight", respectively, unless otherwise specified.

PRODUCTION EXAMPLE 1

Twenty parts of methyl ethyl ketone and 0.03 part of a chain transfer agent (2-mercaptoethanol) together with 10% of 200 parts of a mixture of respective monomers shown in Table 1 below were charged into a reaction vessel and mixed with each other, and then the reaction vessel was fully purged with a nitrogen gas to thereby obtain a mixed solution.

Separately, remaining 90% of the monomer mixture shown in Table 1 was charged into a dropping funnel, and further 0.27 part of the chain transfer agent, 60 parts of methyl ethyl ketone and 1.2 parts of a radical polymerization initiator (2,2'-azobis(2,4-dimethylvaleronitrile)) were added thereto and mixed with each other, and the dropping funnel was fully purged with a nitrogen gas to thereby obtain a mixed solution.

The mixed solution in the reaction vessel was heated to 65°C under stirring in a nitrogen atmosphere, and then the mixed solution in the dropping funnel was gradually dropped thereinto over 3 h. After the elapse of 2 h at 65°C from completion of the dropping, a solution prepared by dissolving 0.3 part of the radical polymerization initiator in 5 parts of methyl ethyl ketone was added to the above obtained reaction solution, and the resultant solution was aged at 65°C for 2 h and further at 70°C for 2 h to obtain a polymer solution.

Meanwhile, details of the compounds shown in Table 1 are as follows.

- Styrene macromer: "AS-6S" (tradename) available from Toagosei Co., Ltd.; number-average molecular weight: 6000; polymerizable functional group: methacryloyloxy group
- Polyethylene glycol monomethacrylate: "NK Ester M-90G" (tradename) available from Shin-Nakamura Kagaku Kogyo Co., Ltd.; average molar number of addition of ethyleneoxide: 9 mol
- Polypropylene glycol monomethacrylate: "Blenmer PP-500" (tradename) available from NOF Corporation; average molar number of addition of propyleneoxide: 9 mol

TABLE 1

| | Production Example 1 |
|---|---|
| Monomer (wt%: pure substance content) | |

(continued)

| | Production Example 1 |
|---|---|
| (a) Methacrylic acid | 10 |
| (b) Styrene macromer | 15 |
| (c) Benzyl methacrylate | 40 |
| (c) Styrene monomer | 10 |
| (d) Polyethylene glycol monomethacrylate | 5 |
| (d) Polypropylene glycol monomethacrylate | 20 |
| Weight-average molecular weight | 200,000 |

EXAMPLE 1

Twenty five parts of the polymer produced by drying the polymer solution obtained in Production Example 1 under reduced pressure was dissolved in 70 parts of methyl ethyl ketone. Further, 4.1 parts of a neutralizing agent (a 5N sodium hydroxide aqueous solution) and 230 parts of ion-exchanged water were added to the resultant solution to neutralize a salt-forming group of the polymer (degree of neutralization: 75%), and then 75 parts of a quinacridone pigment (C.I. Pigment Violet 19 available from Clariant Japan Co., Ltd.; tradename: "Hostaperm Red E5B02") was added into the reaction solution and mixed with each other at 20°C for 1 h using disper blades. The thus obtained mixture was dispersed under a pressure of 200 MPa by passing through a dispersing apparatus "MICROFLUIDIZER" (tradename) available from Microfluidics Corp., 10 times.

The resultant dispersion was mixed with 250 parts of ion-exchanged water under stirring, and then methyl ethyl ketone was removed from the resultant mixture under reduced pressure at 60°C, followed by further removing a part of water therefrom. The obtained mixture was filtered through a 5 $\mu$m-mesh filter (acetyl cellulose membrane; outer diameter: 2.5 cm; available from Fuji Photo Film Co., Ltd.) fitted to a 25 mL syringe without a needle available from Terumo Co., Ltd., to remove coarse particles therefrom, thereby obtaining a water dispersion of pigment-containing vinyl polymer particles having a solid content of 20%. As a result, it was confirmed that the thus obtained pigment-containing vinyl polymer particles had an average particle size of 110 nm, and D10 (particle size at which a cumulative particle size distribution accumulated from the smaller particle size side is 10% (on the basis of number of particles)) and D90 (particle size at which a cumulative particle size distribution accumulated from the smaller particle size side is 90% (on the basis of number of particles)) of the polymer particles were 70 nm and 171 nm, respectively.

To 40 parts of the thus obtained water dispersion of the pigment-containing vinyl polymer particles were added 7 parts of triethylene glycol monobutyl ether, 1 part of "SURFYNOL 465" available from Nissin Chemical Industries Co., Ltd., 0.3 part of "Ploxel XL2" available from Avecia KK and 16.75 parts of colloidal silica ("MP-1040" available from Nissan Chemical Industries Co., Ltd.; average particle size: 131 nm) (pure substance content: 6.7 parts). The obtained mixture was mixed with glycerol and water to prepare 100 parts in total of a solution having an E-type viscosity of 4 mPa·s as measured by a viscometer "RE80" available from Toki Sangyo Co., Ltd. Meanwhile, the E-type viscosity was measured at a temperature of 20°C for 1 min at a rotating speed of 100 rpm using a standard corn rotor (1° 34' $\times$ R24). The resultant mixed solution was filtered through a 1.2 $\mu$m-mesh filter (acetyl cellulose membrane; outer diameter: 2.5 cm; available from Fuji Photo Film Co., Ltd.) fitted to a 25 mL syringe without a needle to remove coarse particles therefrom, thereby obtaining a water-based ink.

EXAMPLE 2

The same procedure as in Example 1 was repeated except that colloidal silica "MP-2040" (average particle size: 210 nm) available from Nissan Chemical Industries Co., Ltd., was used in place of colloidal silica "MP-1040", thereby producing a water-based ink.

EXAMPLE 3

The same procedure as in Example 1 was repeated except that colloidal silica "MP-3040" (average particle size: 366 nm) available from Nissan Chemical Industries Co., Ltd., was used in place of colloidal silica "MP-1040", thereby producing a water-based ink.

EXAMPLE 4

The same procedure as in Example 1 was repeated except that 6.75 parts of colloidal silica "MP-2040" (average particle size: 210 nm; pure substance content: 2.7 parts) available from Nissan Chemical Industries Co., Ltd., was used in place of 16.75 parts of colloidal silica "MP-1040" and an amount of ion-exchanged water added was controlled correspondingly, thereby producing a water-based ink.

EXAMPLE 5

The same procedure as in Example 1 was repeated except that 6.75 parts of colloidal silica "MP-2040" (average particle size: 210 nm; pure substance content: 4.4 parts) available from Nissan Chemical Industries Co., Ltd., was used in place of 16.75 parts of colloidal silica "MP-1040" and an amount of ion-exchanged water added was controlled correspondingly, thereby producing a water-based ink.

EXAMPLE 6

Twenty five parts of the polymer produced by drying the polymer solution obtained in Production Example 1 under reduced pressure was dissolved in 70 parts of methyl ethyl ketone. Further, 4.1 parts of a neutralizing agent (a 5N sodium hydroxide aqueous solution) and 230 parts of ion-exchanged water were added to the resultant solution to neutralize a salt-forming group of the polymer (degree of neutralization: 75%), and then 75 parts of a quinacridone pigment (C.I. Pigment Violet 19 available from Clariant Japan Co., Ltd.; tradename: "Hostaperm Red E5B02") was added into the reaction solution. The resultant reaction mixture was charged together with 100 parts of zirconia beads having a particle size of 100 $\mu$m into a sextuplet sand mill apparatus "Model No. 6TSG-1/4" available from Igarashi Kikai Seizo Co., Ltd., and dispersed at a peripheral speed of 10 m/s and a temperature of 10˚C for 3 h. The thus obtained mixture was dispersed under a pressure of 200 MPa by passing through a dispersing apparatus "MICROFLUIDIZER" (tradename) available from Microfluidics Corp., until an average particle size of the obtained pigment-containing vinyl polymer particles reached 84 nm.
Subsequently, the thus obtained pigment-containing vinyl polymer particles were treated in the same manner as in Example 1 except for using colloidal silica "MP-3040" (average particle size: 366 nm) available from Nissan Chemical Industries Co., Ltd., in place of colloidal silica "MP-1040", thereby producing a water-based ink.

EXAMPLE 7

The same procedure as in Example 1 was repeated except that a cyan pigment (C.I. Pigment Blue 15:4 available from Dainichi Seika Kogyo Co., Ltd.) was used in place of the quinacridone pigment; the pigment-containing vinyl polymer particles was dispersed until an average particle size thereof reached 100 nm; the obtained water dispersion of the pigment-containing vinyl polymer particles and colloidal silica "MP-2040" (average particle size: 210 nm) available from Nissan Chemical Industries Co., Ltd., were used in amounts of 26.7 parts (solid content: 20%) and 41.5 parts (pure substance content: 16.6 parts), respectively; and an amount of ion-exchanged water added was controlled correspondingly, thereby producing a water-based ink.

EXAMPLE 8

The same procedure as in Example 1 was repeated except that a yellow pigment (C.I. Pigment Yellow 74 available from Sanyo Pigment Co., Ltd.) was used in place of the quinacridone pigment; and 25 parts (pure substance content: 10 parts) of colloidal silica "MP-2040" (average particle size: 210 nm) available from Nissan Chemical Industries Co., Ltd., was used in place of 16.75 parts of colloidal silica "MP-1040"; and an amount of ion-exchanged water added was controlled correspondingly, thereby producing a water-based ink.

EXAMPLE 9

The same procedure as in Example 1 was repeated except that 22.3 parts (pure substance content: 6.7 parts) of colloidal silica "CATALOID SI-50" (average particle size: 30 nm) available from Shokubai Kasei Kogyo Co., Ltd., was used in place of 16.75 parts of colloidal silica "MP-1040"; and an amount of ion-exchanged water added was controlled correspondingly, thereby producing a water-based ink.

EXAMPLE 10

The same procedure as in Example 1 was repeated except that colloidal silica "CATALOID SI-45P" (average particle size: 60 nm) available from Shokubai Kasei Kogyo Co., Ltd., was used in place of colloidal silica "MP-1040", thereby producing a water-based ink.

EXAMPLE 11

The same procedure as in Example 1 was repeated except that colloidal silica "SNOWTEX ST-XS" (average particle size: 5 nm) available from Nissan Chemical Industries Co., Ltd., was used in place of colloidal silica "MP-1040", thereby producing a water-based ink.

EXAMPLE 12

The same procedure as in Example 1 was repeated except that hydrophobic silica "SNOWTEX MEK-ST-XL" (average particle size: 200 nm) available from Nissan Chemical Industries Co., Ltd., was used in place of colloidal silica "MP-1040", and added immediately before the viscosity of the dispersion was adjusted by adding glycerol and water thereto in view of preventing coagulation of water-based ink, thereby producing a water-based ink.

EXAMPLE 13

The same procedure as in Example 1 was repeated except that plate-shaped silica "SUNLOVELY PN-010" (average particle size: 256 nm; aspect ratio: 30) available from Tokai Chemical Industries Co., Ltd. (Asahi Glass S.I. Tec Co., Ltd.) was used in place of colloidal silica "MP-1040", and a 5 $\mu$m-mesh filter (acetyl cellulose membrane; outer diameter: 2.5 cm; available from Fuji Photo Film Co., Ltd.) was used in place of the 1.2 $\mu$m-mesh filter, thereby producing a water-based ink.

COMPARATIVE EXAMPLE 1

The same procedure as in Example 1 was repeated except that 16.75 parts of ion-exchanged water was used in place of 16.75 parts of the colloidal silica, thereby producing a water-based ink.

COMPARATIVE EXAMPLE 2

The same procedure as in Example 1 was repeated except that colloidal silica "MP-4640M" (average particle size: 467 nm) available from Nissan Chemical Industries Co., Ltd., was used in place of colloidal silica "MP-1040", thereby producing a water-based ink.

COMPARATIVE EXAMPLE 3

The same procedure as in Example 1 was repeated except that 1.25 parts of colloidal silica "MP-2040" (average particle size: 210 nm; pure substance content: 0.5 parts) available from Nissan Chemical Industries Co., Ltd., was used in place of 16.75 parts of colloidal silica "MP-1040" and an amount of ion-exchanged water added was controlled correspondingly, thereby producing a water-based ink.

Next, the optical density and dispersion stability of the water-based inks obtained in the above Examples and Comparative Examples as well as average particle sizes of pigment-containing water-insoluble polymer particles and silica contained therein were measured and evaluated by the following methods. The results are shown in Tables 2-1 and 2-2.

(1) Optical density

Solid image printing was carried out on a wood-free plain paper (tradename: "XEROX 4024") commercially available from Xerox Corp., using an ink-jet printer "Model EM930C" available from Seiko Epson Corp., under the following printing conditions:

Kind of Paper: Plain Paper
Mode set: Fine (one pass).

After allowing the printed paper to stand at 25˚C for 24 h, the optical density thereof was measured at 5 points including a center and 4 corners of the obtained print (5.1 cm x 8.0 cm) using a Macbeth densitometer (product number: "RD914") available from Gretag-Macbeth Corp., to calculate an average of the measured values. Meanwhile, the optical density was measured after each color to be measured was calibrated using a given calibration plate. Since the printing mode was set to "Fine" and no overprinting of the ink was carried out, the preferred optical density was 0.88 or more.

(2) Dispersion Stability

Ten milliliters of the above prepared water-based ink was filled in a 20 mL screw tube and allowed to stand at 70˚C for one month. The degree of a dispersion stability of the ink was observed by naked eyes and evaluated according to the following ratings:

[Evaluation Criteria]

○: No precipitate was present in ink
△: Substantially no precipitate was present in ink
✕ : Precipitate was present in ink

Method of Measuring Average Particle Sizes. D10 and D90 of Colorant-Containing Water-Insoluble Polymer Particles and Silica

The average particle size, D10 (particle size at which a cumulative particle size distribution accumulated from the smaller particle size side is 10% (on the basis of number of particles)) and D90 (particle size at which a cumulative particle size distribution accumulated from the smaller particle size side is 90% (on the basis of number of particles)) were measured using a laser particle analyzing system "ELS-8000" (cumulant analysis) available from Otsuka Denshi Co., Ltd. The measurement was conducted at a temperature of 25˚C, an angle between incident light and detector of 90˚ and a cumulative frequency of 100 times, and a refractive index of water (1.333) was input to the analyzing system as a refractive index of the dispersing medium. The measurement was carried out at a concentration of usually about $5 \times 10^{-3}$% by weight.

Standard Test and Method of Measuring Average Penetration Depth

Using the following standard ink and a printer available from Seiko Epson Corp., (tradename: "EM-930C"; nozzle diameter: $\phi$38 $\mu$m; resolution: 360 dpi; ejection frequency: 14.4 kHz; printing mode: "Fine"; printing speed: 9.2 ppm; amount of ink droplet: 40 pl), solid image printing (100% Duty solid printing) is carried out on a plain paper (tradename: "4024" available from Xerox Corp.) under the following printing conditions:

Kind of Paper: Plain Paper
Mode set: Fine (one pass).

The thus obtained paper was allowed to stand at 25˚C for 24 h, and a solid-printed portion thereof was cut out using a cutter to measure a penetration depth of the pigment at optional 10 positions on a cut section of the paper using an extra-depth profile measuring microscope "VK-8500" available from Keyence Co., Ltd., and the average penetration depth was calculated from the measured values.

Standard Ink

The ink having the following blending composition was used as the standard ink. Meanwhile, the amounts blended were calculated in terms of pure substance contents of the respective components.
A mixture obtained by blending 7.47 parts by weight of quinacridone pigment-containing vinyl polymer particles obtained in Example 1 having an average particle size of 110 nm (D10: 70 nm; D90: 171 nm) (average particle size: 110 nm; polymer/pigment: 25 parts/75 parts; polymer composition: methacrylic acid/styrene macromer/benzyl methacrylate/styrene monomer/polyethylene glycol monomethacrylate/polypropylene glycol methacrylate = 10/15/40/10/5/20; 75% neutralized product neutralized with sodium hydroxide), 10 parts by weight of 2-pyrrolidone, 1 part by weight of "SUFYNOL 465" available from Nissin Chemical Industries, Co., Ltd., and 10 parts by weight of the metal oxide fine particles with each other, was mixed with glycerol and water to prepare 100 parts by weight in total of a solution having an E-type viscosity of 4 mPa·s as measured at 20˚C using a viscometer "RE80" available from Toki Sangyo Co., Ltd. Thereafter, the obtained solution was filtered through a 1.2 μm-mesh filter (acetyl cellulose membrane; outer diameter: 2.5 cm; available from Fuji Photo Film Co., Ltd.) fitted to a 25 mL syringe without a needle to remove coarse particles therefrom.

(Results of Measurement of Average Penetration Depth)

It was confirmed that when colloidal silica "MP-2040" (average particle size: 210 nm) available from Nissan Chemical Industries Co., Ltd., was used as the metal oxide fine particles, the average penetration depth of the pigment was 50 μm, whereas when no metal oxide fine particles were used and an increased amount of ion-exchanged water was used instead, the average penetration depth of the pigment was 77 μm.

TABLE 2-1

|  | Silica | | | Pigment | |
|---|---|---|---|---|---|
|  | Name | Average particle size (nm) | Content (wt%) | Average particle size (pigment-containing water-insoluble polymer particles) (nm) | Content (wt%) |
| Example 1 | MP-1040 | 131 | 6.7 | 110 | 6 |
| Example 2 | MP-2040 | 210 | 6.7 | 110 | 6 |
| Example 3 | MP-3040 | 366 | 6.7 | 110 | 6 |
| Example 4 | MP-2040 | 210 | 2.7 | 110 | 6 |
| Example 5 | MP-2040 | 210 | 4.4 | 110 | 6 |
| Example 6 | MP-3040 | 366 | 6.7 | 84 | 6 |
| Example 7 | MP-2040 | 210 | 16.6 | 100 | 4 |
| Example 8 | MP-2040 | 210 | 10 | 110 | 6 |
| Example 9 | SI-50 | 30 | 6.7 | 110 | 6 |
| Example 10 | SI-46P | 60 | 6.7 | 110 | 6 |
| Example 11 | ST-XS | 5 | 6.7 | 110 | 6 |
| Example 12 | MEK-ST-XL | 200 | 6.7 | 125 | 6 |
| Example 13 | PN-010 | 256 | 4 | 120 | 6 |
| Comparative Example 1 | - | - | - | 110 | 6 |
| Comparative Example 2 | MP-4540M | 467 | 6.7 | 110 | 6 |
| Comparative Example 3 | MP-2040 | 210 | 0.5 | 110 | 6 |

TABLE 2-2

|  | Particle size ratio (silica/pigment-containing water-insoluble polymer particles) | Weight ratio (silica/pigment) | Printing performance | |
|---|---|---|---|---|
|  |  |  | Optical density | Dispersion stability |
| Example 1 | 1.19 | 1.12 | 0.93 | ○ |
| Example 2 | 1.91 | 1.12 | 0.95 | ○ |
| Example 3 | 3.33 | 1.12 | 0.97 | △ |

(continued)

| | Particle size ratio (silica/pigment-containing water-insoluble polymer particles) | Weight ratio (silica/pigment) | Printing performance | |
|---|---|---|---|---|
| | | | Optical density | Dispersion stability |
| Example 4 | 1.91 | 0.45 | 0.91 | ○ |
| Example 5 | 1.91 | 0.73 | 0.93 | ○ |
| Example 6 | 4.36 | 1.12 | 1.00 | △ |
| Example 7 | 2.10 | 4.15 | 1.10 | △ |
| Example 8 | 1.91 | 1.67 | 1.14 | ○ |
| Example 9 | 0.28 | 1.12 | 0.88 | ○ |
| Example 10 | 0.55 | 1.12 | 0.90 | ○ |
| Example 11 | 0.05 | 1.12 | 0.94 | ○ |
| Example 12 | 1.60 | 1.12 | 1.00 | △ |
| Example 13 | 2.13 | 0.67 | 1.08 | ○ |
| Comparative Example 1 | - | - | 0.85 | ○ |
| Comparative Example 2 | 4.25 | 1.12 | Defective ejection | × |
| Comparative Example 3 | 1.91 | 0.08 | 0.86 | ○ |

**Claims**

1. A water dispersion for ink-jet printing comprising a colorant, metal oxide fine particles having an average particle size of 110 to 400 nm, and water-insoluble polymer particles, a weight ratio of the metal oxide fine particles to the colorant (metal oxide fine particles/colorant) being from 0.2 to 5.

2. A water dispersion for ink-jet printing comprising metal oxide fine particles having an average particle size of 400 nm or smaller, and colorant-containing water-insoluble polymer particles, a weight ratio of the metal oxide fine particles to the colorant (metal oxide fine particles/colorant) being from 0.2 to 5.

3. The water dispersion for ink-jet printing of claim 2 where the metal oxide particles are plate-shaped metal oxide fine particles.

4. The water dispersion for inkjet printing of claim 1 where the metal oxide fire particles are plate-shaped metal oxide fine particles.

5. The water dispersion according to claim 1 or 2, wherein the metal oxide fine particles are at least one kind of particles selected from the group consisting of colloidal particles and hydrophobic particles.

6. The water dispersion according to any one of claims 1 to 4, wherein the metal oxide fine particles are silica fine particles.

7. The water dispersion according to any one of claims 1 to 4, wherein a content of the metal oxide fine particles in the water dispersion is 1 to 30% by weight.

8. The water dispersion according to claim 2 or 3, wherein a ratio of an average particle size of the metal oxide fine particles to an average particle size of the colorant-containing water-insoluble polymer particles [(average particle size of the metal oxide fine particles)/(average particle size of the colorant-containing water-insoluble polymer particles)] is from 0.005 to 8.

9. The water dispersion according to claim 2 or 3, wherein the colorant-containing water-insoluble polymer particles have an average particle size of 50 to 200 nm.

10. The water dispersion according to any one of claims 1 to 4, wherein the colorant is a pigment.

11. The water dispersion according to any one of claims 1 to 4, wherein the water-insoluble polymer is a water-insoluble graft polymer containing a polymer comprising a constitutional unit derived from (a) a salt-forming group-containing monomer and a constitutional unit derived from (b) a hydrophobic monomer in a main chain thereof, and a polymer comprising a constitutional unit derived from (c) a macromer in a side chain thereof.

12. A water-based ink for ink-jet printing comprising the water dispersion as defined in any one of claims 1 to 11.

13. A method of improving an optical density of images, comprising printing the images with the water-based ink as defined in claim 12 by an ink-jet printing method.

**Patentansprüche**

1. Wasserdispersion für den Tintenstrahldruck, umfassend ein Färbemittel, feine Metalloxidteilchen mit einer durchschnittlichen Teilchengröße von 110 bis 400 nm und wasserunlöslichen Polymerteilchen, worin ein Gewichtsverhältnis der feinen Metalloxidteilchen zum Färbemittel (feine Metalloxidteilchen/Färbemitte) von 0,2 bis 5 ist.

2. Wasserdispersion für den Tintenstrahldruck, umfassend feine Metalloxidteilchen mit einer durchschnittlichen Teilchengröße von 400 nm oder weniger und farbstoffhaltigen wasserunlöslichen Polymerteilchen, worin ein Gewichtsverhältnis der feinen Metalloxidteilchen zu dem Färbemittel (feine Metalloxidteilchen/Färbemittel) von 0,2 bis 5 ist.

3. Wasserdispersion für den Tintenstrahldruck nach Anspruch 2, worin die Metalloxidteilchen plättchenförmige feine Metalloxidteilchen sind.

4. Wasserdispersion für den Tintenstrahldruck nach Anspruch 1, worin die feinen Metalloxidteilchen plättchenförmige feine Metalloxidteilchen sind.

5. Wasserdispersion nach Anspruch 1 oder 2, worin die feinen Metalloxidteilchen zumindest eine Art von Teilchen sind, ausgewählt aus der Gruppe bestehend aus kolloidalen Teilchen und hydrophoben Teilchen.

6. Wasserdispersion nach einem der Ansprüche 1 bis 4, worin die feinen Metalloxidteilchen feine Silikateilchen sind.

7. Wasserdispersion nach einem der Ansprüche 1 bis 4, worin ein Gehalt der feinen Metalloxidteilchen in der Wasserdispersion 1 bis 30 Gew.-% ist.

8. Wasserdispersion nach Anspruch 2 oder 3, worin ein Verhältnis einer durchschnittlichen Teilchengröße der feinen Metalloxidteilchen zu einer durchschnittlichen Teilchengröße der farbstoffhaltigen, wasserunlöslichen Polymerteilchen [(durchschnittliche Teilchengröße der feinen Metalloxidteilchen)/(durchschnittliche Teilchengröße der farbstoffhaltigen, wasserunlöslichen Polymerteilchen)] von 0,005 bis 8 ist.

9. Wasserdispersion nach Anspruch 2 oder 3, worin die farbstoffhaltigen, wasserunlöslichen Polymerteilchen eine durchschnittliche Teilchengröße von 50 bis 200 nm haben.

10. Wasserdispersion nach einem der Ansprüche 1 bis 4, worin das Färbemittel ein Pigment ist.

11. Wasserdispersion nach einem der Ansprüche 1 bis 4, worin das wasserunlösliche Polymer ein wasserunlösliches Pfropfpolymer ist, umfassend ein Polymer, umfassend eine Konstitutionseinheit, die von (a) einem Monomer mit einer salzbildenden Gruppe stammt, und eine Konstitutionseinheit, die von (b) einem hydrophoben Monomer in einer Hauptkette davon stammt, und ein Polymer, umfassend eine Konstitutionseinheit, die von (c) einem Makromer in einer Seitenkette davon stammt.

**12.** Tinte auf Wasserbasis für den Tintenstrahldruck, umfassend die Wasserdispersion wie in einem der Ansprüche 1 bis 11 definiert.

**13.** Verfahren zur Verbesserung einer optischen Dichte von Bildern, umfassend das Drucken der Bilder mit der Tinte auf Wasserbasis wie in Anspruch 12 definiert, durch ein Tintenstrahldruckverfahren.

**Revendications**

**1.** Dispersion d'eau pour impression à jet d'encre comprenant un colorant, des fines particules d'oxyde de métal ayant une taille de particule moyenne de 110 à 400 nm, et des particules de polymère insolubles dans l'eau, un rapport de poids des fines particules d'oxyde de métal sur le colorant (fines particules d'oxyde de métal / colorant) étant de 0,2 à 5.

**2.** Dispersion d'eau pour impression à jet d'encre comprenant des fines particules d'oxyde de métal ayant une taille de particule moyenne de 400 nm ou moins, et des particules de polymère insolubles dans l'eau contenant un colorant, un rapport de poids des fines particules d'oxyde de métal sur le colorant (fines particules d'oxyde de métal/ colorant) étant de 0,2 à 5.

**3.** Dispersion d'eau pour impression à jet d'encre selon la revendication 2, dans laquelle les particules d'oxyde de métal sont des fines particules d'oxyde de métal en forme de plaque.

**4.** Dispersion d'eau pour impression à jet d'encre selon la revendication 1, dans laquelle les fines particules d'oxyde de métal sont des fines particules d'oxyde de métal en forme de plaque.

**5.** Dispersion d'eau selon la revendication 1 ou 2, dans laquelle les fines particules d'oxyde de métal sont au moins une sorte de particules sélectionnées dans le groupe constitué par des particules colloïdales et des particules hydrophobes.

**6.** Dispersion d'eau selon l'une quelconque des revendications 1 à 4, dans laquelle les fines particules d'oxyde de métal sont des fines particules de silice.

**7.** Dispersion d'eau selon l'une quelconque des revendications 1 à 4, dans laquelle une teneur des fines particules d'oxyde de métal dans la dispersion d'eau est de 1 à 30 % en poids.

**8.** Dispersion d'eau selon la revendication 2 ou 3, dans laquelle un rapport d'une taille de particule moyenne des fines particules d'oxyde de métal sur une taille de particule moyenne des particules de polymère insolubles dans l'eau contenant un colorant [(taille de particule moyenne des fines particules d'oxyde de métal) / (taille de particule moyenne des particules de polymère insolubles dans l'eau contenant un colorant)] est de 0,005 à 8.

**9.** Dispersion d'eau selon la revendication 2 ou 3, dans laquelle les particules de polymère insolubles dans l'eau contenant un colorant ont une taille de particule moyenne de 50 à 200 nm.

**10.** Dispersion d'eau selon l'une quelconque des revendications 1 à 4, dans laquelle le colorant est un pigment.

**11.** Dispersion d'eau selon l'une quelconque des revendications 1 à 4, dans laquelle le polymère insoluble dans l'eau est un polymère greffé insoluble dans l'eau contenant un polymère comprenant une unité constitutionnelle dérivée (a) d'un monomère contenant un groupe de formation de sel et une unité constitutionnelle dérivée (b) d'un monomère hydrophobe dans une chaîne principale de celui-ci, et un polymère comprenant une unité constitutionnelle dérivée (c) d'un macromère dans une chaîne latérale de celui-ci.

**12.** Encre à base d'eau pour impression à jet d'encre comprenant la dispersion d'eau telle que définie dans l'une quelconque des revendications 1 à 11.

**13.** Procédé pour améliorer une densité optique d'images, comprenant l'impression des images avec l'encre à base d'eau telle que définie dans la revendication 12 par un procédé d'impression à jet d'encre.

**EP 1 760 122 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5925178 A
- WO 2004003090 A
- EP 0947567 A
- WO 2004035684 A
- JP 2004091590 A
- JP 9227812 A
- JP 11012516 A
- JP 2005272494 A
- JP 7033260 B
- JP 6073389 A
- JP 6206720 A
- JP 7187647 A
- JP 9286939 A